# EUROPÄISCHE PATENTSCHRIFT

(11) **EP 3 967 535 B1**
(45) Veröffentlichungstag und Bekanntmachung des Hinweises auf die Patenterteilung: **15.01.2025**
(21) Anmeldenummer: 21189341.7
(22) Anmeldetag: 03.08.2021
(51) Int. Cl.: B60K 17/08, B60K 17/16

(54) **ANTRIEBSEINHEIT**
DRIVE UNIT
UNITÉ D'ENTRAÎNEMENT

(30) Priorität: 10.09.2020 DE 102020211372
(43) Veröffentlichungstag der Anmeldung: 16.03.2022
(73) Patentinhaber: Robert Bosch GmbH, 70442 Stuttgart (DE)
(72) Erfinder: Schlittenbauer, Tobias, 71679 Asperg (DE); Jung, Philipp, 74321 Bietigheim-Bissingen (DE)

(56) Entgegenhaltungen:
- DE-A1- 102015 101 042
- DE-A1- 102018 131 489
- US-A1- 2019 176 620

## Beschreibung

### Stand der Technik

Die Erfindung betrifft eine Antriebseinheit gemäß Oberbegriff des Anspruchs 1.

DE 10 2015 101 042 A1 offenbart eine elektrisch antreibbare Achse für ein Kraftfahrzeug, wobei mittels der Achse zwei Gangstufen realisierbar sind, und die Achse eine einzige Elektromaschine, mehrere Planetengetriebe, ein Differentialgetriebe, zwei Abtriebswellen zum Antreiben von der Achse zugeordneten Laufrädern des Kraftfahrzeuges sowie Mittel zum Schalten der Gangstufen aufweist. DE 10 2018 131489 A1 und US 2019/176620 A1 offenbaren jeweils eine Antriebseinheit mit einem ähnlichen Aufbau wie in der vorliegenden Erfindung.

### Offenbarung der Erfindung

Das der Erfindung zugrunde liegende Problem wird durch eine Antriebseinheit mit den Merkmalen des Anspruchs 1 gelöst. Vorteilhafte Weiterbildungen sind in den Unteransprüchen genannt.

Erfindungsgemäß wird eine Antriebseinheit vorgeschlagen, die eine elektrische Maschine und ein Getriebe aufweist. Das Getriebe weist eine Schaltbaugruppe auf. Die Schaltbaugruppe weist ein erstes Sonnenrad, ein zweites Sonnenrad, mehrere erste Planetenräder, mehrere zweite Planetenräder und ein erstes Hohlrad auf.

Das erste Sonnenrad kämmt mit den ersten Planetenrädern und das zweite Sonnenrad kämmt mit den zweiten Planetenrädern. Die zweiten Planetenräder kämmen mit den ersten Planetenrädern und die ersten Planetenräder kämmen mit dem ersten Hohlrad. Dabei sind die zweiten Planetenräder und die ersten Planetenräder mittels eines ersten (gemeinsamen) Planetenträgers miteinander gekoppelt bzw. werden durch diesen gehalten. Der erste Planetenträger stellt den Abtrieb für die Schaltbaugruppe dar. Das erste Sonnenrad stellt den Antrieb für die Schaltbaugruppe dar.

Zudem weist das Getriebe eine Übersetzungsbaugruppe auf. Die Übersetzungsbaugruppe weist ein drittes Sonnenrad, mehrere dritte Planetenräder, ein zweites Hohlrad und einen zweiten Planetenträger auf. Dabei werden die dritten Planetenräder durch den zweiten Planetenträger gehalten.

Das dritte Sonnenrad kämmt mit den dritten Planetenrädern und die dritten Planetenräder kämmen mit dem zweiten Hohlrad. Das dritte Sonnenrad stellt den Antrieb für die Übersetzungsbaugruppe dar. Der zweite Planetenträger stellt den Abtrieb der Übersetzungsbaugruppe dar.

Das erste Sonnenrad ist derart mit der elektrischen Maschine gekoppelt, dass das erste Sonnenrad mittels der elektrischen Maschine angetrieben werden kann. Hierzu kann das erste Sonnenrad bspw. mit der Motorwelle bzw. der Hohlwelle der elektrischen Maschine gekoppelt sein. Das dritte Sonnenrad ist derart mit dem ersten Planetenträger gekoppelt, dass das dritte Sonnenrad mittels des ersten Planetenträgers angetrieben werden kann.

Alternativ dazu kann das erste Sonnenrad derart mit dem zweiten Planetenträger gekoppelt sein, dass das erste Sonnenrad mittels des zweiten Planetenträger angetrieben werden kann. Das dritte Sonnenrad kann derart mit der elektrischen Maschine gekoppelt sein, dass das dritte Sonnenrad mittels der elektrischen Maschine angetrieben werden kann. Hierzu kann das dritte Sonnenrad bspw. mit Motorwelle bzw. Hohlwelle der elektrischen Maschine gekoppelt sein.

Die Schaltbaugruppe kann als Planetengetriebe ausgeführt sein, insbesondere als Ravigneaux-Radsatz ausgebildet sein. Dabei kann das erste Sonnenrad als ein großes Sonnenrad, das zweite Sonnenrad als ein kleines Sonnenrad, die ersten Planetenräder als Außenplanetenräder und die zweiten Planetenräder als Innenplanetenräder ausgebildet sein.

Die Schaltbaugruppe kann mindestens drei, insbesondere genau drei, erste Planetenräder aufweisen. Die Schaltbaugruppe kann mindestens drei, insbesondere genau drei, zweite Planetenräder aufweisen. Die Übersetzungsbaugruppe kann mindestens drei, insbesondere genau drei, dritte Planetenräder aufweisen.

Die Übersetzungsbaugruppe kann auch als Stufenplanetengetriebe oder Stirnradgetriebe (insbesondere für achsparallele Strukturen) ausgebildet sein.

Planetengetriebe können sehr kompakt aufgebaut sein und erlauben eine hohe Leistungsdichte. Insbesondere der Ravigneaux-Radsatz kann bei kompaktesten Abmessungen radial wie axial häufig geforderte Anforderungen bezüglich Übersetzungen und Bauraum erfüllen.

Durch die Symmetrie der Planetengetriebe ergeben sich günstige Konditionen für ein gutes NVH-Verhalten (Noise Vibration Harshness).

Die Antriebseinheit kann als elektrische Antriebseinheit für ein Fahrzeug oder Kraftfahrzeug dienen, bspw. in Form einer elektrischen Achse ("E-Achse"). Auch eine Anwendung im Maschinenbau ist denkbar, bspw. als Antriebseinheit für eine Werkzeugmaschine.

Die elektrische Maschine kann einen Rotor aufweisen, der auf einer Rotorwelle angeordnet und drehfest mit der Rotorwelle gekoppelt ist. Die Rotorwelle kann mit der Eingangswelle des Getriebes gekoppelt sein oder die Eingangswelle des Getriebes ausbilden. Die elektrische Maschine kann zudem einen Stator aufweisen, der mit dem Rotor elektromagnetisch zusammenwirkt. Die elektrische Maschine und/oder das Getriebe können jeweils ein Gehäuse aufweisen, in dem Komponenten von elektrische Maschine und/oder Getriebe ganz oder teilweise angeordnet sind.

Gemäß einer Weiterbildung kann die Antriebseinheit ein Differential aufweisen. Die elektrische Maschine kann mittels des Getriebes mit dem Differential gekoppelt sein. Somit kann die elektrische Maschine über das Getriebe das Differential antreiben. Das Differential kann derart mit dem ersten Planetenträger oder dem zweiten Planetenträger gekoppelt sein, dass das Differential mittels des ersten Planetenträgers oder mittels des zweiten Planetenträgers angetrieben werden kann.

Gemäß einer Weiterbildung kann die elektrische Maschine eine Rotorwelle aufweisen. Das Differential kann mit einer ersten Achsseitenwelle und einer zweiten Achsseitenwelle gekoppelt sein. Dabei kann die Rotorwelle koaxial, parallel oder senkrecht zu der ersten und/oder der zweiten Achsseitenwelle angeordnet sein.

Gemäß einer Weiterbildung kann die Rotorwelle als Hohlwelle ausgebildet sein. Dabei kann die erste Achsseitenwelle oder die zweite Achsseitenwelle durch die Hohlwelle hindurch geführt sein.

Gemäß einer Weiterbildung kann die Hohlwelle drehfest mit dem ersten Sonnenrad oder dem dritten Sonnenrad gekoppelt sein. Insbesondere kann die Hohlwelle mit dem ersten Sonnenrad oder dem dritten Sonnenrad gefügt sein.

Gemäß einer Weiterbildung kann die Schaltbaugruppe bzw. das Getriebe eine erste Bremse aufweisen. Die erste Bremse kann derart ausgebildet sein, dass sie das zweite Sonnenrad abbremsen oder blockieren kann.

Gemäß einer Weiterbildung kann die Schaltbaugruppe bzw. das Getriebe eine zweite Bremse aufweisen. Die zweite Bremse kann derart ausgebildet sein, dass sie das erste Hohlrad abbremsen oder blockieren kann.

Die erste Bremse und/oder die zweite Bremse kann in eine geöffnete bzw. unbetätigte Stellung (keine Bremswirkung) und in eine geschlossene bzw. betätigte Stellung (es erfolgt eine Bremswirkung) verbracht werden. Die Bremse kann jeweils hydraulisch, elektromotorisch und/oder elektromagnetisch betätigt werden, bspw. durch einen entsprechenden Aktuator.

Sofern ein Gehäuse (Getriebegehäuse) vorhanden ist, so geschieht die Bremswirkung bzw. das Blockieren in Bezug auf das Getriebegehäuse. Ist also ein Rad blockiert, so bewegt bzw. dreht sich dieses nicht in Bezug auf das eventuell vorhandene Getriebegehäuse.

Gemäß einer Weiterbildung kann die Schaltbaugruppe bzw. das Getriebe eine erste Schaltstufe und eine zweite Schaltstufe aufweisen. Dabei kann in der ersten Schaltstufe die zweite Bremse geschlossen (das erste Hohlrad wird gebremst bzw. blockiert) und die erste Bremse geöffnet sein. In der zweiten Schaltstufe kann die erste Bremse geschlossen (das zweite Sonnenrad wird gebremst bzw. blockiert) und die zweite Bremse geöffnet sein. Somit kann über die erste Schaltstufe ein erster Gang und über die zweite Schaltstufe ein zweiter Gang des Getriebes realisiert werden.

Durch Überschneidungsschaltungen beim Öffnen bzw. Schließen der beiden Bremsen kann eine zugkraftunterbrechungsfreie Schaltung ermöglicht werden.

Die Lastschaltbarkeit im Betrieb erlaubt zugkraftunterbrechungsfreie Beschleunigung und hohen Komfort, sowie auch kontinuierliche Energierückgewinnung während Rekuperationsphasen durch Lastschaltbarkeit auch im Schubbetrieb.

Der Ravigneaux-Radsatz ist definitionsgemäß aus einer Kombination eines Plus- und Minus-Planetengetriebes aufgebaut. Die Standübersetzungen sind definiert zu i_{0M} als Standübersetzung des Minus-Planetengetriebes und i_{0P} als Standübersetzung des Plus-Planetengetriebes.

Daraus ergibt sich eine Übersetzung i₁ für den ersten Gang mit i₁=(1-i_{0M}). Im ersten Gang ist die zweite Bremse geschlossen und somit das erste Hohlrad blockiert.

Für den zweiten Gang ergibt sich eine Übersetzung i₂ mit i₂=(1-i_{0M})-(i_{0M}*(1- i_{0P})/i_{0P}). Im zweiten Gang ist die erste Bremse geschlossen und somit das zweite Sonnenrad blockiert.

Gemäß einer Weiterbildung kann die Schaltbaugruppe bzw. das Getriebe eine Parksperrenfunktion aufweisen. In der Parksperrenfunktion kann die erste Bremse und die zweite Bremse geschlossen sein. Somit können das erste Hohlrad und das zweite Sonnenrad gleichzeitig gebremst bzw. blockiert werden. Dadurch kann die Schaltbaugruppe bzw. das Getriebe blockiert werden. Mit anderen Worten, durch das Schließen bzw. Betätigen beider Bremsen kann eine Parksperre realisiert werden.

Gemäß einer Weiterbildung kann zur Bereitstellung einer Parksperrenfunktion ein Parksperrenrad vorgesehen sein. Das Parksperrenrad kann drehfest auf dem ersten Planetenträger oder auf dem zweiten Planetenträger angeordnet oder mit dem jeweiligen Planetenträger gekoppelt sein. Das Parksperrenrad kann mittels eines betätigbaren Blockierelements, welches mit dem Parksperrenrad in Eingriff bringbar ist, blockiert werden. Das Blockierelement kann bspw. über einen entsprechenden Aktuator betätigt werden.

Nachfolgend werden mögliche Ausführungsformen der Erfindung unter Bezugnahme auf die beiliegenden Zeichnungen erläutert. Es zeigen:
- Figur 1: eine schematische Darstellung einer Antriebseinheit;
- Figur 2: eine schematische Darstellung eines weiteren Ausführungsbeispiels der Antriebseinheit;
- Figur 3: eine schematische Darstellung eines weiteren Ausführungsbeispiels der Antriebseinheit und
- Figur 4: eine schematische Darstellung eines weiteren Ausführungsbeispiels der Antriebseinheit

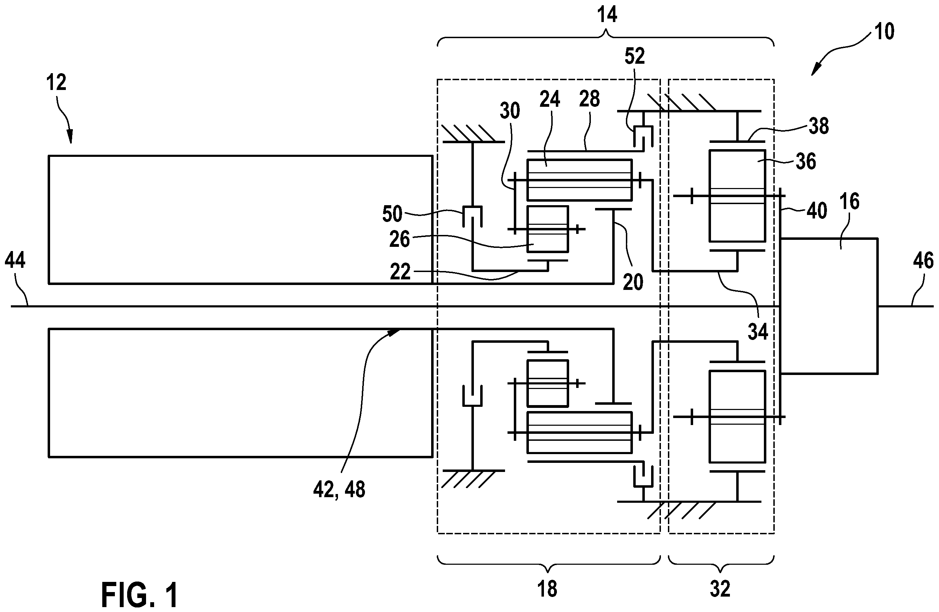

Figur 1 zeigt eine schematische Darstellung einer Antriebseinheit 10 mit einer elektrischen Maschine 12 und einem Getriebe 14. Das Getriebe 14 weist eine Schaltbaugruppe 18 und eine Übersetzungsbaugruppe 32 auf. Diese sind in Figur 1 jeweils durch eine gestrichelte Umrandung gekennzeichnet.

Die Schaltbaugruppe 18 ist im Beispiel als Ravigneaux-Radsatz ausgebildet und weist ein erstes Sonnenrad 20 (großes Sonnenrad), ein zweites Sonnenrad 22 (kleines Sonnenrad), mehrere erste Planetenräder 24 (Außenplanetenräder), mehrere zweite Planetenräder 26 (Innenplanetenräder) und ein erstes Hohlrad 28 auf.

Das erste Sonnenrad 20 kämmt mit den ersten Planetenrädern 24. Das erste Sonnenrad 20 stellt den Antrieb für die Schaltbaugruppe 18. Das zweite Sonnenrad 22 kämmt mit den zweiten Planetenrädern 26. Die zweiten Planetenräder 26 kämmen mit den ersten Planetenrädern 24 und die ersten Planetenräder 24 kämmen mit dem ersten Hohlrad 28.

Die zweiten Planetenräder 26 und die ersten Planetenräder 24 sind mittels eines ersten (gemeinsamen) Planetenträgers 30 miteinander gekoppelt bzw. werden durch diesen gehalten. Der Planetenträger 30 stellt den Abrieb der Schaltbaugruppe 18 dar.

Die Übersetzungsbaugruppe 32 weist ein drittes Sonnenrad 34, mehrere dritte Planetenräder 36, ein zweites Hohlrad 38 und einen zweiten Planetenträger 40 auf.

Das dritte Sonnenrad 34 kämmt mit den dritten Planetenrädern 36 und die dritten Planetenräder 36 kämmen mit dem zweiten Hohlrad 38. Das dritte Sonnenrad 34 stellt den Antrieb und der zweite Planetenträger 40 stellt den Abtrieb der Übersetzungsbaugruppe 32 dar.

Die Antriebseinheit 10 weist ein Differential 16 auf. Dabei ist die elektrische Maschine 12 mittels des Getriebes 14 mit dem Differential 16 gekoppelt, so dass die elektrische Maschine 12 über das Getriebe 14 das Differential 16 antreiben kann.

Die elektrische Maschine 12 ist mit der Schaltbaugruppe 18 gekoppelt, die Schaltbaugruppe 18 ist mit der Übersetzungsbaugruppe 32 gekoppelt und die Übersetzungsbaugruppe 32 ist mit dem Differenzial 16 gekoppelt.

Dazu ist das Differential 16 derart mit dem zweiten Planetenträger 40 gekoppelt, dass das Differential 16 mittels des zweiten Planetenträgers 40 angetrieben werden kann (zweiter Planetenträger 40 ist mit dem Differentialantrieb, bspw. mit dem Differentialkorb, des Differentials 16 gekoppelt).

Die elektrische Maschine 12 weist eine Rotorwelle 42 auf. Das Differential 16 ist mit einer ersten Achsseitenwelle 44 und einer zweiten Achsseitenwelle 46 gekoppelt (Achsseitenwellen 44, 46 sind mit dem Differentialabtrieb gekoppelt). Die Rotorwelle 42, die erste Achsseitenwelle 44 und die zweite Achsseitenwelle 46 sind koaxial zueinander angeordnet.

Die Rotorwelle 42 ist vorliegend als Hohlwelle 48 ausgebildet. Dabei ist die erste Achsseitenwelle 44 durch die Hohlwelle 48 hindurch geführt. Die Hohlwelle 48 und die beiden Achsseitenwellen 44, 46 sind koaxial zueinander angeordnet.

Das erste Sonnenrad 20 ist derart mit der elektrischen Maschine 12 gekoppelt, dass das erste Sonnenrad 20 mittels der elektrischen Maschine 12 angetrieben werden kann. Hierzu ist das erste Sonnenrad 20 drehfest mit der Hohlwelle 48 verbunden oder gefügt bzw. an dieser angeordnet.

Das dritte Sonnenrad 34 ist derart mit dem ersten Planetenträger 30 gekoppelt, dass das dritte Sonnenrad 34 mittels des ersten Planetenträgers 30 angetrieben werden kann.

Die Schaltbaugruppe 18 weist eine erste Bremse 50 auf. Die erste Bremse 50 ist derart ausgebildet, dass sie das zweite Sonnenrad 22 abbremsen oder blockieren kann.

Die Schaltbaugruppe 18 weist zudem eine zweite Bremse 52 auf. Die zweite Bremse 52 ist derart ausgebildet, dass sie das erste Hohlrad 28 abbremsen oder blockieren kann.

Beide Bremsen 50,52 können separat oder gemeinsam beispielsweise durch einen (gemeinsamen oder jeweils einen separaten) hydraulischen, elektromotorischen und/oder elektromagnetischen Aktuator betätigt werden.

Das in Figur 1 gezeigte Getriebe 14 stellt ein zweistufiges Getriebe 14 mit zwei Schaltstufen bzw zwei Gängen dar. Dabei lässt sich der erste Gang dadurch realisieren bzw. schalten, dass die zweite Bremse 52 betätigt wird und somit das erste Hohlrad 28 blockiert wird. Die erste Bremse 50 ist im ersten Gang geöffnet, so dass das zweite Sonnenrad 22 nicht blockiert wird.

Der zweite Gang lässt sich dadurch realisieren bzw. schalten, dass die erste Bremse 50 betätigt wird und somit das zweite Sonnenrad 22 blockiert wird. Die zweite Bremse 52 ist im zweiten Gang geöffnet, so dass das erste Hohlrad 28 nicht blockiert wird.

Werden beide Bremsen 50, 52 geschlossen, so werden das erste Hohlrad 28 und das zweite Sonnenrad 22 zeitgleich blockiert. Dadurch wird die gesamte Schaltbaugruppe 18 bzw. das Getriebe 14 blockiert. Auf diese Art und Weise lässt sich eine Parksperrfunktion realisieren.

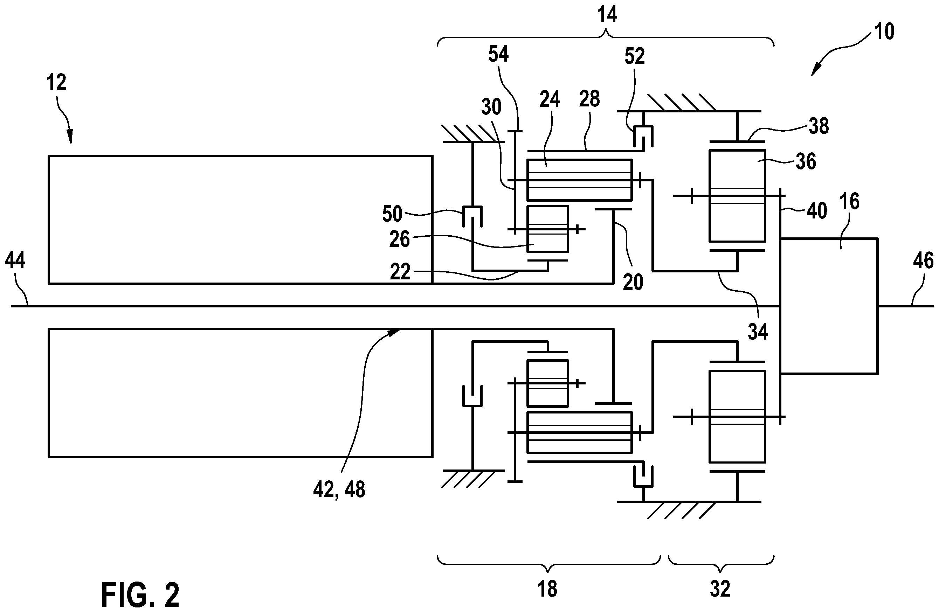

Figur 2 zeigt eine schematische Darstellung eines weiteren Ausführungsbeispiels der Antriebseinheit 10. Dieses Ausführungsbeispiel unterscheidet sich von dem in Figur 1 gezeigten Ausführungsbeispiel dadurch, dass zur Bereitstellung einer Parksperrenfunktion ein Parksperrenrad 54 vorgesehen ist. Dies entspricht einer konventionellen Parksperre.

Vorliegend ist das Parksperrenrad 54 drehfest auf dem ersten Planetenträger 30 angeordnet. Das Parksperrenrad 54 kann mittels eines betätigbaren Blockierelements (nicht dargestellt), welches mit dem Parksperrenrad 54 in Eingriff bringbar ist, blockiert werden.

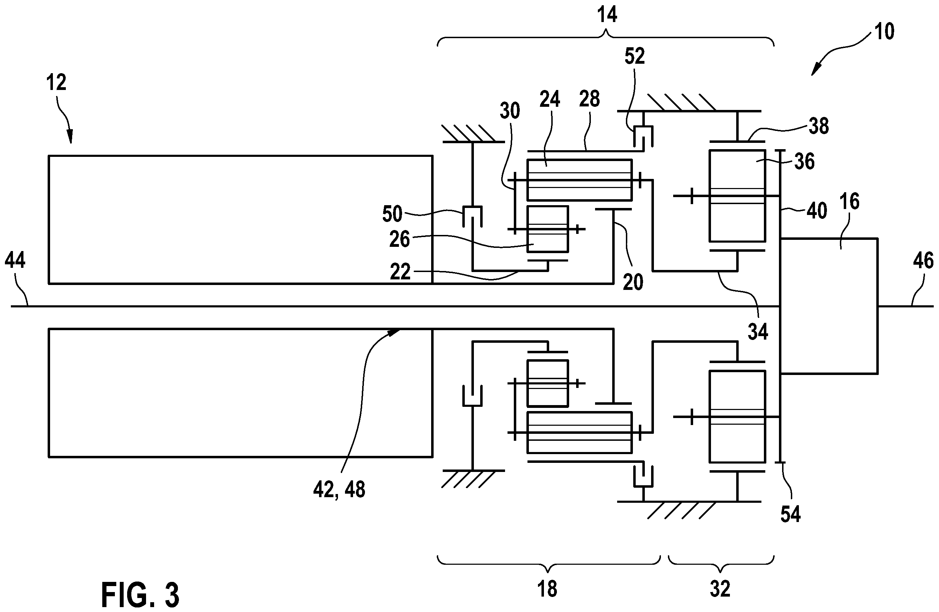

Figur 3 zeigt eine schematische Darstellung eines weiteren Ausführungsbeispiels der Antriebseinheit 10. Dieses Ausführungsbeispiel unterscheidet sich von dem in Figur 2 gezeigten Ausführungsbeispiel dadurch, dass das Parksperrenrad 54 drehfest auf dem zweiten Planetenträger 40 angeordnet ist.

Analog zum in Figur 2 gezeigeten Ausführungsbeispiel kann das Parksperrenrad 54 mittels eines betätigbaren Blockierelements (nicht dargestellt), welches mit dem Parksperrenrad 54 in Eingriff bringbar ist, blockiert werden.

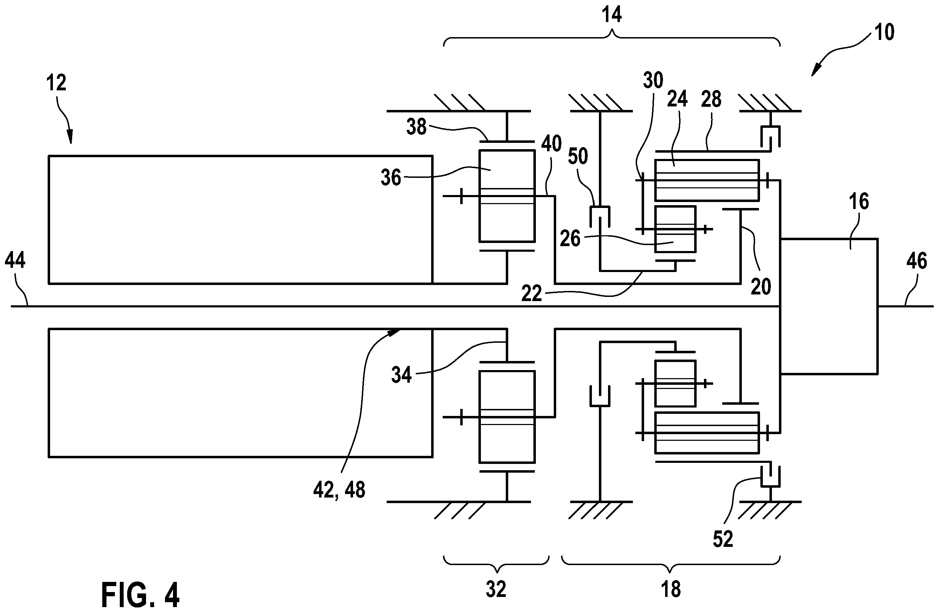

Figur 4 zeigt eine schematische Darstellung eines weiteren Ausführungsbeispiels der Antriebseinheit 10. Dieses Ausführungsbeispiel unterscheidet sich von dem in Figur 1 gezeigten Ausführungsbeispiel dadurch, dass die Schaltbaugruppe 18 und die Übersetzungsbaugruppe 32 vertauscht zueinander angeordnet sind.

Die elektrische Maschine 12 ist mit der Übersetzungsbaugruppe 32 gekoppelt, die Übersetzungsbaugruppe 32 ist mit der Schaltbaugruppe 18 gekoppelt und die Schaltbaugruppe 18 ist mit dem Differenzial 16 gekoppelt.

Das dritte Sonnenrad 34 ist derart mit der elektrischen Maschine 12 gekoppelt, dass das dritte Sonnenrad 34 mittels der elektrischen Maschine 12 angetrieben werden kann. Hierzu ist das dritte Sonnenrad 34 drehfest mit der Hohlwelle 48 verbunden oder gefügt bzw. an dieser angeordnet.

Das erste Sonnenrad 20 ist derart mit dem zweiten Planetenträger 40 gekoppelt, dass das erste Sonnenrad 20 mittels des zweiten Planetenträger 40 angetrieben werden kann.

Das Differential 16 ist derart mit dem ersten Planetenträger 30 gekoppelt, dass das Differential 16 mittels des ersten Planetenträgers 30 angetrieben werden kann.

## Patentansprüche

1. Antriebseinheit (10), mit einer elektrischen Maschine (12) und einem Getriebe (14), wobei das Getriebe (14) eine Schaltbaugruppe (18) aufweist, wobei die Schaltbaugruppe (18) ein erstes Sonnenrad (20), ein zweites Sonnenrad (22), mehrere erste Planetenräder (24), mehrere zweite Planetenräder (26) und ein erstes Hohlrad (28) aufweist,
wobei das erste Sonnenrad (20) mit den ersten Planetenrädern (24) kämmt, das zweite Sonnenrad (22) mit den zweiten Planetenrädern (26) kämmt,
**dadurch gekennzeichnet, dass** die zweiten Planetenräder (26) mit den ersten Planetenrädern (24) kämmen und die ersten Planetenräder (24) mit dem ersten Hohlrad (28) kämmen, wobei die zweiten Planetenräder (26) und die ersten Planetenräder (24) mittels eines ersten Planetenträgers (30) miteinander gekoppelt sind,
wobei dass das Getriebe (14) eine Übersetzungsbaugruppe (32) aufweist, wobei die Übersetzungsbaugruppe (32) ein drittes Sonnenrad (34), mehrere dritte Planetenräder (36), ein zweites Hohlrad (38) und einen zweiten Planetenträger (40) aufweist, wobei das dritte Sonnenrad (34) mit den dritten Planetenrädern (36) kämmt und die dritten Planetenräder (36) mit dem zweiten Hohlrad (38) kämmen, wobei das erste Sonnenrad (20) derart mit der elektrischen Maschine (12) gekoppelt ist, dass das erste Sonnenrad (20) mittels der elektrischen Maschine (12) angetrieben werden kann, und das dritte Sonnenrad (34) derart mit dem ersten Planetenträger (30) gekoppelt ist, dass das dritte Sonnenrad (34) mittels des ersten Planetenträgers (30) angetrieben werden kann, oder
wobei das erste Sonnenrad (20) derart mit dem zweiten Planetenträger (40) gekoppelt ist, dass das erste Sonnenrad (20) mittels des zweiten Planetenträger (40) angetrieben werden kann, und das dritte Sonnenrad (34) derart mit der elektrischen Maschine (12) gekoppelt ist, dass das dritte Sonnenrad (34) mittels der elektrischen Maschine (12) angetrieben werden kann.

2. Antriebseinheit (10) nach Anspruch 1, **dadurch gekennzeichnet, dass** die Antriebseinheit ein Differential (16) aufweist, wobei die elektrische Maschine (12) mittels des Getriebes (14) mit dem Differential (16) gekoppelt ist, so dass die elektrische Maschine (12) über das Getriebe (14) das Differential (16) antreiben kann, wobei das Differential (16) derart mit dem ersten Planetenträger (30) oder dem zweiten Planetenträger (40) gekoppelt ist, dass das Differential (16) mittels des ersten Planetenträgers (30) oder mittels des zweiten Planetenträgers (40) angetrieben werden kann.

3. Antriebseinheit (10) nach Anspruch 1 oder Anspruch 2, **dadurch gekennzeichnet, dass** die elektrische Maschine (12) eine Rotorwelle (42) aufweist, wobei das Differential (16) mit einer ersten Achsseitenwelle (44) und einer zweiten Achsseitenwelle (46) gekoppelt ist, wobei die Rotorwelle (42) koaxial, parallel oder senkrecht zu der ersten und/oder der zweiten Achsseitenwelle (44, 46) angeordnet ist.

4. Antriebseinheit (10) nach dem voranstehenden Anspruch, **dadurch gekennzeichnet, dass** die Rotorwelle (42) als Hohlwelle (48) ausgebildet ist, wobei die erste Achsseitenwelle (44) oder die zweite Achsseitenwelle (46) durch die Hohlwelle (48) hindurch geführt ist.

5. Antriebseinheit (10) nach dem voranstehenden Anspruch, **dadurch gekennzeichnet, dass** die Hohlwelle (48) drehfest mit dem ersten Sonnenrad (20) oder dem dritten Sonnenrad (34) gekoppelt ist.

6. Antriebseinheit (10) nach einem der voranstehenden Ansprüche, **dadurch gekennzeichnet, dass** die Schaltbaugruppe (18) eine erste Bremse (50) aufweist, wobei die erste Bremse (50) derart ausgebildet ist, dass sie das zweite Sonnenrad (22) abbremsen oder blockieren kann.

7. Antriebseinheit (10) nach einem der voranstehenden Ansprüche, **dadurch gekennzeichnet, dass** die Schaltbaugruppe (18) eine zweite Bremse (52) aufweist, wobei die zweite Bremse (52) derart ausgebildet ist, dass sie das erste Hohlrad (28) abbremsen oder blockieren kann.

8. Antriebseinheit (10) nach Anspruch 6 und 7, **dadurch gekennzeichnet, dass** die Schaltbaugruppe (18) eine erste Schaltstufe und eine zweite Schaltstufe aufweist, wobei in der ersten Schaltstufe die zweite Bremse (52) geschlossen und die erste Bremse (50) geöffnet ist, und wobei in der zweiten Schaltstufe die erste Bremse (50) geschlossen und die zweite Bremse (52) geöffnet ist.

9. Antriebseinheit (10) nach Anspruch 6 und 7 oder nach Anspruch 8, **dadurch gekennzeichnet, dass** die Schaltbaugruppe (18) eine Parksperrenfunktion aufweist, in der die erste Bremse (50) und die zweite Bremse (52) geschlossen sind.

10. Antriebseinheit (10) nach einem der voranstehenden Ansprüche, **dadurch gekennzeichnet, dass** zur Bereitstellung einer Parksperrenfunktion ein Parksperrenrad (54) vorgesehen ist, welches drehfest auf dem ersten Planetenträger (30) oder auf dem zweiten Planetenträger (40) angeordnet oder mit dem jeweiligen Planetenträger (30, 40) gekoppelt ist und mittels eines betätigbaren Blockierelements, welches mit dem Parksperrenrad (54, 55) in Eingriff bringbar ist, blockierbar ist.

## Claims

1. Drive unit (10), comprising an electric machine (12) and a gearbox (14),
wherein the gearbox (14) has a shift assembly (18), wherein the shift assembly (18) has a first sun gear (20), a second sun gear (22), a plurality of first planet gears (24), a plurality of second planet gears (26) and a first ring gear (28),
wherein the first sun gear (20) meshes with the first planet gears (24), the second sun gear (22) meshes with the second planet gears (26), **characterized in that** the second planet gears (26) mesh with the first planet gears (24) and the first planet gears (24) mesh with the first ring gear (28), wherein the second planet gears (26) and the first planet gears (24) are coupled to each other by means of a first planet carrier (30),
wherein the gearbox (14) has a transmission assembly (32), wherein the transmission assembly (32) has a third sun gear (34), a plurality of third planet gears (36), a second ring gear (38) and a second planet carrier (40), wherein the third sun gear (34) meshes with the third planet gears (36) and the third planet gears (36) mesh with the second ring gear (38), wherein the first sun gear (20) is coupled to the electric machine (12) in such a way that the first sun gear (20) can be driven by means of the electric machine (12), and the third sun gear (34) is coupled to the first planet carrier (30) in such a way that the third sun gear (34) can be driven by means of the first planet carrier (30), or
wherein the first sun gear (20) is coupled to the second planet carrier (40) in such a way that the first sun gear (20) can be driven by means of the second planet carrier (40), and the third sun gear (34) is coupled to the electric machine (12) in such a way that the third sun gear (34) can be driven by means of the electric machine (12).

2. Drive unit (10) according to Claim 1, **characterized in that** the drive unit has a differential (16), wherein the electric machine (12) is coupled to the differential (16) by means of the gearbox (14), so that the electric machine (12) can drive the differential (16) via the gearbox (14), wherein the differential (16) is coupled to the first planet carrier (30) or the second planet carrier (40) in such a way that the differential (16) can be driven by means of the first planet carrier (30) or by means of the second planet carrier (40).

3. Drive unit (10) according to Claim 1 or Claim 2, **characterized in that** the electric machine (12) has a rotor shaft (42), wherein the differential (16) is coupled to a first axle lateral shaft (44) and a second axle lateral shaft (46), wherein the rotor shaft (42) is arranged coaxially, parallel or perpendicular to the first and/or the second axle lateral shaft (44, 46).

4. Drive unit (10) according to the preceding claim, **characterized in that** the rotor shaft (42) is designed as a hollow shaft (48), wherein the first axle lateral shaft (44) or the second axle lateral shaft (46) is guided through the hollow shaft (48).

5. Drive unit (10) according to the preceding claim, **characterized in that** the hollow shaft (48) is coupled in a rotationally fixed manner to the first sun gear (20) or the third sun gear (34).

6. Drive unit (10) according to any of the preceding claims, **characterized in that** the shift assembly (18) has a first brake (50), wherein the first brake (50) is designed in such a way that it can brake or block the second sun gear (22).

7. Drive unit (10) according to any of the preceding claims, **characterized in that** the shift assembly (18) has a second brake (52), wherein the second brake (52) is designed in such a way that it can brake or block the first ring gear (28).

8. Drive unit (10) according to Claims 6 and 7, **characterized in that** the shift assembly (18) has a first shift stage and a second shift stage, wherein the second brake (52) is closed and the first brake (50) is open in the first shift stage, and the first brake (50) is closed and the second brake (52) is open in the second shift stage.

9. Drive unit (10) according to Claims 6 and 7 or according to Claim 8, **characterized in that** the shift assembly (18) has a parking lock function, in which the first brake (50) and the second brake (52) are closed.

10. Drive unit (10) according to any of the preceding claims, **characterized in that**, in order to provide a parking lock function, a parking lock wheel (54) is provided, which is arranged in a rotationally fixed manner on the first planet carrier (30) or on the second planet carrier (40) or is coupled to the respective planet carrier (30, 40) and can be blocked by means of an actuable blocking element which can be brought into engagement with the parking lock wheel (54, 55).

## Revendications

1. Unité d'entraînement (10), comportant une machine électrique (12) et une transmission (14), la transmission (14) présentant un ensemble de changement de vitesse (18), l'ensemble de changement de vitesse (18) présentant une première roue planétaire (20), une deuxième roue planétaire (22), plusieurs premières roues satellites (24), plusieurs deuxièmes roues satellites (26) et une première couronne (28),
la première roue planétaire (20) s'engrenant avec les premières roues satellites (24), la deuxième roue planétaire (22) s'engrenant avec les deuxièmes roues satellites (26), **caractérisée en ce que** les deuxièmes roues satellites (26) s'engrènent avec les premières roues satellites (24) et les premières roues satellites (24) s'engrènent avec la première couronne (28), les deuxièmes roues satellites (26) et les premières roues satellites (24) étant accouplées les unes aux autres à l'aide d'un premier porte-satellites (30),
la transmission (14) présentant un ensemble de réduction (32), l'ensemble de réduction (32) présentant une troisième roue planétaire (34), plusieurs troisièmes roues satellites (36), une deuxième couronne (38) et un deuxième porte-satellites (40), la troisième roue planétaire (34) s'engrenant avec les troisièmes roues satellites (36) et les troisièmes roues satellites (36) s'engrenant avec la deuxième couronne (38), la première roue planétaire (20) étant accouplée à la machine électrique (12) de telle sorte que la première roue planétaire (20) peut être entraînée à l'aide de la machine électrique (12), et la troisième roue planétaire (34) étant accouplée au premier porte-satellites (30) de telle sorte que la troisième roue planétaire (34) peut être entraînée à l'aide du premier porte-satellites (30), ou
la première roue planétaire (20) étant accouplée au deuxième porte-satellites (40) de telle sorte que la première roue planétaire (20) peut être entraînée à l'aide du deuxième porte-satellites (40), et la troisième roue planétaire (34) étant accouplée à la machine électrique (12) de telle sorte que la troisième roue planétaire (34) peut être entraînée à l'aide de la machine électrique (12).

2. Unité d'entraînement (10) selon la revendication 1, **caractérisée en ce que** l'unité d'entraînement présente un différentiel (16), la machine électrique (12) étant accouplée au différentiel (16) à l'aide de la transmission (14), de sorte que la machine électrique (12) peut entraîner le différentiel (16) par le biais de la transmission (14), le différentiel (16) étant accouplé au premier porte-satellites (30) ou au deuxième porte-satellites (40) de telle sorte que le différentiel (16) peut être entraîné à l'aide du premier porte-satellites (30) ou à l'aide du deuxième porte-satellites (40).

3. Unité d'entraînement (10) selon la revendication 1 ou la revendication 2, **caractérisée en ce que** la machine électrique (12) présente un arbre de rotor (42), le différentiel (16) étant accouplé à un premier arbre latéral d'essieu (44) et un deuxième arbre latéral d'essieu (46), l'arbre de rotor (42) étant disposé de manière coaxiale, parallèle ou perpendiculaire au premier et/ou au deuxième arbre latéral d'essieu (44, 46).

4. Unité d'entraînement (10) selon la revendication précédente, **caractérisée en ce que** l'arbre de rotor (42) est réalisé sous forme d'arbre creux (48), le premier arbre latéral d'essieu (44) ou le deuxième arbre latéral d'essieu (46) étant guidé à travers l'arbre creux (48).

5. Unité d'entraînement (10) selon la revendication précédente, **caractérisée en ce que** l'arbre creux (48) est accouplé de manière solidaire en rotation à la première roue planétaire (20) ou à la troisième roue planétaire (34).

6. Unité d'entraînement (10) selon l'une des revendications précédentes, **caractérisée en ce que** l'ensemble de changement de vitesse (18) présente un premier frein (50), le premier frein (50) étant réalisé de telle sorte qu'il peut freiner ou bloquer la deuxième roue planétaire (22).

7. Unité d'entraînement (10) selon l'une des revendications précédentes, **caractérisée en ce que** l'ensemble de changement de vitesse (18) présente un deuxième frein (52), le deuxième frein (52) étant réalisé de telle sorte qu'il peut freiner ou bloquer la première couronne (28).

8. Unité d'entraînement (10) selon les revendications 6 et 7, **caractérisée en ce que** l'ensemble de changement de vitesse (18) présente un premier étage de changement de vitesse et un deuxième étage de changement de vitesse, le deuxième frein (52) étant fermé et le premier frein (50) étant ouvert dans le premier étage de changement de vitesse, et le premier frein (50) étant fermé et le deuxième frein (52) étant ouvert dans le deuxième étage de changement de vitesse.

9. Unité d'entraînement (10) selon les revendications 6 et 7 ou selon la revendication 8, **caractérisée en ce que** l'ensemble de changement de vitesse (18) présente une fonction de blocage de stationnement dans laquelle le premier frein (50) et le deuxième frein (52) sont fermés.

10. Unité d'entraînement (10) selon l'une des revendications précédentes, **caractérisée en ce que**, pour fournir une fonction de blocage de stationnement, il est prévu une roue de blocage de stationnement (54) qui est disposée de manière solidaire en rotation sur le premier porte-satellites (30) ou sur le deuxième porte-satellites (40) ou est accouplée au porte-satellites (30, 40) respectif et est apte à être bloquée à l'aide d'un élément de blocage actionnable qui est apte à être mis en prise avec la roue de blocage de stationnement (54, 55).
